(19) **Europäisches Patentamt**

**European Patent Office**

**Office européen des brevets**

(11) Veröffentlichungsnummer : **0 104 418**
**B1**

(12) **EUROPÄISCHE PATENTSCHRIFT**

(45) Veröffentlichungstag der Patentschrift : .
16.04.86

(21) Anmeldenummer : **83108233.4**

(22) Anmeldetag : **20.08.83**

(51) Int. Cl.⁴ : **A 61 C 17/02**, A 61 C 19/00

(54) Vorrichtung zum Einlassen von Reinigungs- und Spülwasser in zahnärztliche Behandlungseinrichtungen.

(30) Priorität : **31.08.82 DE 3232290**

(43) Veröffentlichungstag der Anmeldung :
**04.04.84 Patentblatt 84/14**

(45) Bekanntmachung des Hinweises auf die Patenterteilung : **16.04.86 Patentblatt 86/16**

(84) Benannte Vertragsstaaten :
**AT BE CH DE FR GB IT LI LU NL SE**

(56) Entgegenhaltungen :
**DE-A- 2 230 285 ·
DE-A- 2 716 252
FR-A- 1 431 552**

(73) Patentinhaber : **Dürr-Dental GmbH & Co. KG
Postfach 305 Höpfigheimer Strasse 17
D-7120 Bietigheim (DE)**

(72) Erfinder : **Hofmann, Hans-Joachim, Ing. grad.
August-Lämmle-Strasse 26
D-7064 Remshalden 3 (DE)**
Erfinder : **Hlawatsch, Dieter, Dipl.-Ing.
Holzwiesenweg 11
D-7120 Bietigheim (DE)**

(74) Vertreter : **Utermann, Gerd, Dipl.-Ing.
Kilianstrasse 7 Kilianspassage Postfach 3525
D-7100 Heilbronn (DE)**

EP 0 104 418 B1

**Beschreibung**

Die Erfindung betrifft eine Vorrichtung zum Einlassen von Reinigungs- und Spülwasser in eine zahnärztliche Behandlungseinrichtung, wobei Mittel zum Verhindern des Rückflusses ins Versorgungsnetz derart vorgesehen sind, daß das Wasser mit Hilfe eines steuerbaren Absperrventils in einen Vorratsraum eingelassen wird, der wenigstens einen Überlaufausgang und in seinem unteren Bereich wenigstens eine Entnahmeöffnung aufweist und wobei ein Füllstandstaster mit dem Absperrventil zusammenwirkt.

Es sind die verschiedensten Vorrichtungen dieser Art in der allgemeinen Technik, beispielsweise für die Versorgung von Waschmaschinen, Geschirrspülmaschinen und dgl. bekannt. Es muß nämlich sichergestellt werden, daß beim Ausfall des Drucks im Versorgungsnetz ein Rücksaugen von verunreinigter Flüssigkeit mit Sicherheit vermieden wird. Deshalb verlangen die Vorschriften, daß eine Luftstrecke zwischen Wassereinlauf und Wasserentnahme vorgehen ist. Im Bereich der Versorgung zahnärztlicher Geräte hat man bisher nur wenige Stellen gehabt, an denen man einen direkten Wassereinlauf in eine Einrichtung gebraucht hätte. Insbesondere benötigt man jedoch eine Wasserspülung bei Sauganlagen, mittels deren aus dem Patientenmund Blut, Speichel und damit auch Bakterien angesaugt werden. Bisher wurde die Reinigung und Desinfektion dieser Sauganlagen dadurch vorgenommen, daß man mit dem Saugrohr oder Saugmundstück des Schlauches aus einem von Hand gefüllten Behältnis Wasser und/oder Desinfektionsmittel ansaugte, um so das gesamte System zu reinigen. Erhöhte Hygieneanforderungen und das Bemühen, auch diesen Vorgang zu automatisieren, erfordern nun ein automatisches Zuführen von Reinigungs- und/oder Spülwasser unmittelbar in die Sauganlagen oder dgl. Dabei treten ungleich kompliziertere Verhältnisse bezüglich der Gefahr der Kontamination mit Blut oder Bakterien auf, als sie bei Spülmaschinen oder Waschmaschinen bestehen, zumal die räumlichen Verhältnisse für die Unterbringung einer solchen Einlaßvorrichtung andere sind als bei einer Spül- oder Waschmaschine. Es muß eine sehr kleine Vorrichtung geschaffen werden. Die Wassermengen sind sehr klein. Die Unterbringung getrennter Förderpumpen für das Wasser würde weiteren Raum beanspruchen und erhebliche Kosten verursachen. Es müssen über relativ lange Zeiten relativ kleine Mengen mit dem Unterdruck des Saugsystems angesaugt werden und im ganzen System sollte die Gefahr der Kontamination mit einzelnen Blutstropfen und dgl. und Bakterien auf ein Mindestmaß auch für längere Zeit herabgedrückt werden. Die bisherigen versuchsweise eingesetzten Vorrichtungen solcher Art hatten eine Vielzahl von praktischen Ausführungsproblemen vor allem dadurch, daß beim Einströmenlassen des Wassers in den Vorratsraum starke Bewegungen in diesem auftreten können, die ein sauberes Steuern des Füllstandes kaum möglich machten. Außerdem besteht bei derartigen Verwirbelungen im Vorratsraum die Gefahr der Kontamination der Einlaßeinrichtung mit möglicherweise in den Vorratsraum gelangten Bakterien. Demgemäß soll durch die Erfindung die Gefahr von unerwünscht starken Bewegungen im Vorratsraum gemindert und eine für zahnärztliche Behandlungseinrichtungen spezifisch geeignete Vorrichtung vorgeschlagen werden.

Erfindungsgemäß ist vorgesehen, daß zwecks Beruhigung des Flüssigkeitsspiegels im Bereich des Füllstandstasters dem Vorratsraum ein Zwischensammelbehälter zugeordnet ist, in den das Wasser aus einer dem Absperrventil nachgeordneten Einlaßdüse fließt und daß wenigstens eine Überströmöffnung am Zwischensammelbehälter vorgesehen ist, aus der das Wasser in den Vorratsraum abfließt. Nunmehr gelangt der Flüssigkeitsstrahl nicht unmittelbar auf die Oberfläche des im Vorratsraum noch vorhandenen Wassers, sondern in den Zwischensammelbehälter. Dabei kann man durch geeignete Anordnung seiner Wände, der Einstrahlrichtung und der Ausgestaltung des Einlaßstrahles ein nach den räumlichen Verhältnissen und gerätetechnischen Möglichkeiten optimales Einfließenlassen erreichen. Aus dem Zwischensammelbehälter gelangt das Wasser durch Durchlaß- oder Überlauföffnungen entsprechender Dimensionierung beruhigt in den Vorratsraum, so daß der Flüssigkeitsspiegel langsam ansteigt oder beim Verbrauch abnimmt, ohne daß kurzzeitige Schwankungen mit Verwirbelungen an dessen Oberfläche auftreten, die einerseits zum häufigen Ein- und Ausschalten des Absperrventils führen konnten und die andererseits durch Hochspritzenlassen von Oberflächenpartikelchen das im Vorratsraum befindliche Wasser mit der Einlaßdüse in Verbindung brachten. Diese Gefahren sind jetzt vermieden. Das Ventil kann bei Bedarf eingeschaltet werden und schaltet nur einmal bei Erreichen des gewünschten Füllstandes ab, weil der Flüssigkeitsspiegel sich langsam anhebt. Dabei kann man beliebige Füllstandstaster mit Schwimmern oder sonstigen unmittelbaren elektronischen Abtasteinrichtungen vorsehen. Vorratsraum und Zwischensammelbehälter können die verschiedensten Formen aufweisen. Zweckmäßig wird der Zwischensammelbehälter über dem Vorratsraum angesehen. Er kann jedoch wenigstens teilweise auch innerhalb des Vorratsraumes liegen und von diesem umgeben sein. Die konstruktive Ausführung ist leicht und ohne großen Zusatzaufwand ausführbar. Auch bei kleinen Raumverhältnissen kann ein Zwischensammelbehälter untergebracht werden.

Zweckmäßig ist es, wenn der Zwischensammelbehälter als Überströmöffnungen im Bereich seines Bodens Ablaßöffnungen und im Abstand über dem Boden wenigstens eine Überlauföffnung aufweist. Dann wird der Wasserstrom in den Vorratsraum auf mehrere Öffnungen verteilt und durch den Boden kann ständig ein kleiner Anteil langsam abgelassen werden, während bei Erreichen der gesamten Füllung des Zwischensammelbehälters ein Teil des Wassers überläuft. Durch die Anordnung der Einlaßdüse im Bereich des oberen Randes des Zwischensammelbehälters und nicht in größerem Abstand davon wird ein starkes Spritzen auch bei hohem Einlaßdruck vermieden, weil alle Spritzer im Zwischensammelbehälter aufgefangen werden.

Eine konstruktiv günstige und nur wenig Raum beanspruchende, für viele Einsatzfälle geeignete Ausführung sieht vor, daß der Vorratsraum in einem langgestreckten, vertikal angeordneten, vorzugsweise kreisröhrenförmigen Gehäuse vorgesehen ist, welches im Abstand unter der Einlaßdüse in der Seitenwand als Überlaufausgänge einen Überlaufanschluß und eine Überlaufausnehmung aufweist und daß die Überlauföffnung des vorzugsweise kreiszylinderförmigen Zwischensammelbehälters auf der der Überlaufausnehmung des Gehäuses gegenüberliegenden Seite angeordnet ist und der Zwischensammelbehälter im Bereich der Überlaufausnehmung der Wand des Gehäuses des Vorratsraumes eine den eintretenden Wasserstrahl abdeckende Wand aufweist, die im Abstand von der Seitenwand des Gehäuses verläuft. Durch die günstige Lage der verschiedenen notwendigen oder sinnvollen Überlauföffnungen wird vermieden, daß Spritzwasser direkt oder nahezu unmittelbar von der Einlaßdüse zur Überlaufausnehmung des Vorratsraumes gelangt und so der Umgebungsraum der Vorrichtung der Gefahr des Naßwerdens ausgesetzt ist. Die etwa zylindrische Übereinander- und Ineinander-Anordnung der einzelnen Teile gestattet günstige Strömungsverhältnisse sowie Herstellungs- und Montagemöglichkeiten.

Der Überlaufanschluß am Vorratsraum kann mit einem schräg nach unten weisenden Rohrstutzen gebildet sein, auf welchen ein Überlaufschlauch steckbar ist. So kann in den Vorratsraum unbeabsichtigt einlaufendes Wasser mit Sicherheit einfach zum Abfluß geleitet werden, ohne daß die Gefahr des Anstieg des Wasserspiegels oder die Gefahr des Gelangens von Spritzer aus dem Vorratswasser an die Düse bestünde.

Auch der Gestaltung des Wassereinlaßstromes ist Beachtung zu widmen, weil auch dadurch die Verwirbelungsverhältnisse in der gesamten Vorrichtung stark beeinflußt werden. Demgemäß sieht eine weitere Ausgestaltung der Erfindung vor, daß der Auslaßstutzen des Absperrventils einen Beruhigungsraum aufweist, in dem ein loch- oder schlitz-korb-förmiges Beruhigungselement angeordnet ist, durch welches das vom Absperrventil abgegebene Wasser zur Einlaßdüse fließt. Man kann so zwar ein handelsübliches Absperrventil am Einlaß verwenden, diesem jedoch eine besondere Düsenanordnung zuordnen, die einen gleichmäßigen und gut gebündelten Wasserstrom austreten läßt.

Den Zwischensammelbehälter wird man stets wenigstens teilweise oberhalb des Vorratsraumes vorsehen müssen, weil das Wasser überlaufen muß. Man kann ihn konstruktiv einfach auf einem Haltestab anordnen, der vom Boden des Vorratsraumes aufragt. In diesem Haltestab lassen sich günstig Schalteinrichtungen für den Füllstandstaster unterbringen und zwar insbesondere in Form eines mit magnetischen Kräften schaltbaren Reed-Kontaktes. Den Haltestab umgibt dann zweckmäßig ein ringförmiger Schwimmer, in dem sich ein Dauermagnet befindet. Die konstruktive Ausgestaltung ist einfach und die Schaltung sicher möglich. Haltestab und Schwimmer sind mit Hubbegrenzungsanschlägen auszustatten, um den Schwimmer keine unkontrollierten Bewegungen ausführen zu lassen. Montagetechnisch und für die Herstellung ist es günstig, wenn der Haltestab mit dem Reed-Kontakt von einer Bodenplatte getragen ist, welche mit Hilfe einer Überwurfmutter unten am Gehäuse unter Beilage einer Dichtung angeschraubt ist.

Die Entnahmeöffnungen für den Vorratsraum können in verschiedener Weise vorgesehen sein, beispielsweise durch hineinragende Leitungen. Zweckmäßig bildet man jedoch in der Gehäusewand im unteren Bereich mehrere Schlauchanschlußstutzen aus. Diese können in gleicher Höhe oder auch in unterschiedlichen Höhen liegen, je nachdem, welchen Wasserbedarf die einzelnen Abnehmer aufweisen und welche Gesichtspunkte bei Konstruktion und Herstellung sowie im Einbaufall zu berücksichtigen sind.

Für die Befestigung des Absperrventils gibt es die verschiedensten Lösungen je nach Art des Ventils. Besonders vorteilhaft ist ein handelsübliches Magnetabsperrventil mit Steckbefestigung, für welches das Gehäuse im oberen Bereich einen nach oben offenen Einsteckraum aufweisen kann. Die Montage wird erleichtert, wenn das Gehäuse an seinem Umfang mit einer Hubbegrenzungen aufweisenden klemmbaren Halteschelle und Haltehaken für die Steuerleitungen ausgebildet ist. Das Gehäuse kann je nach dem Einsatzzweck mit weiteren Vorrichtungsteilen gemeinsam hergestellt oder aus mehreren Teilen zusammengesetzt sein. Für viele Einsatzfälle eignet sich jedoch ein herstellungsmäßig preiswertes Gehäuse, welches ein einstückiger, langgestreckter, rohrförmiger Körper mit angeformten Entnahme-Schlauchanschlußstutzen und Überlaufanschluß aus spritzgegossenem Kunststoff ist. Die Betätigung des Absperrventils kann auf verschiedene Weise erfolgen. Insbesondere eignet sich eine elektromagnetische Betätigung zumal diese bei den kleinen Raumverhältnissen auch günstige Schalterausbildung und Füllstandsabtastung gestattet. Weitere Einzelheiten, Ausgestaltungen und Vorteile der Erfindung ergeben sich auch aus dem nachfolgenden, anhand der Zeichnungen abgefaßten Beschreibungsteil.

Ein Ausführungsbeispiel der Erfindung wird nachfolgend anhand der Zeichnungen näher erläutert und beschrieben.

Es zeigen :

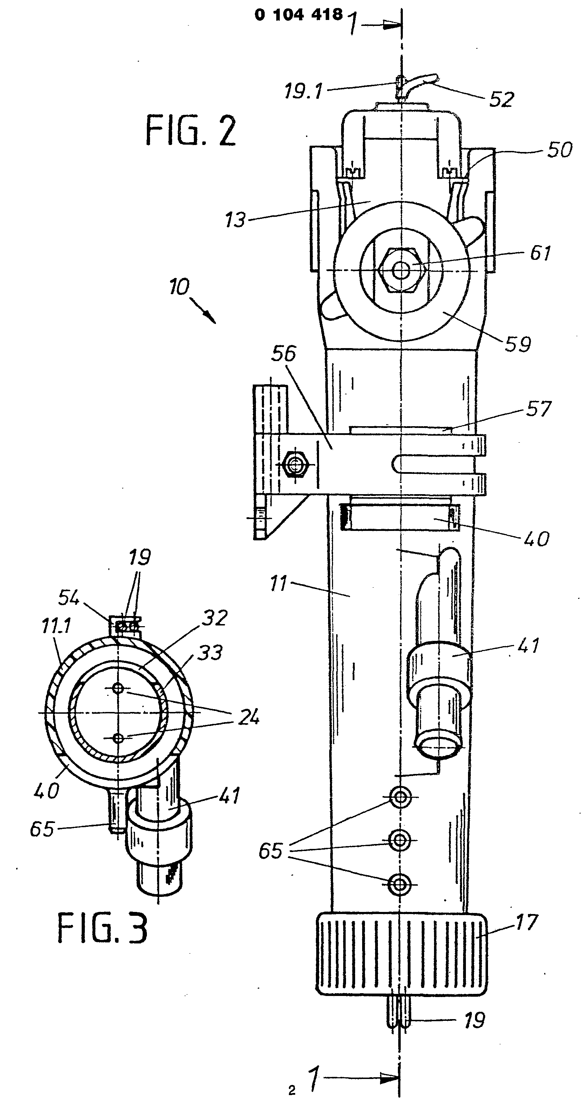

Figur 1 einen Vertikalschnitt längs der Linie 1-1 in Fig. 2 durch die Vorrichtung ;

Figur 2 eine Ansicht von rechts auf die Vorrichtung nach Fig. 1 ;

Figur 3 einen Querschnitt längs der Linie 3-3 in Fig. 1.

Die Vorrichtung 10 hat ein etwa kreiszylinderförmiges oder kreisrohrförmiges langgestrecktes Gehäuse 11, welches oben einen im Querschnitt etwa quadratischen Einsteckraum 12 für ein handelsübliches elektromagnetisch betätigtes Absperrventil 13 aufweist. Das untere Ende 14 ist mit einer Bodenplatte 15 unter Beilage einer Dichtung 16 verschlossen, in dem eine Überwurfmutter 17 aufgeschraubt ist, die eine Mittelausnehmung 18 für Schalterleitungen 19 aufweist. Das Gehäuse 11 hat einen im wesentlichen zylindrischen Innenraum 20, der sich in einen unteren Vorratsraum 20.1 und einen oberen Eintritts- und Überlaufraum 20.2 gliedert, ohne daß diese streng durch eine Wand oder dergleichen getrennt wären.

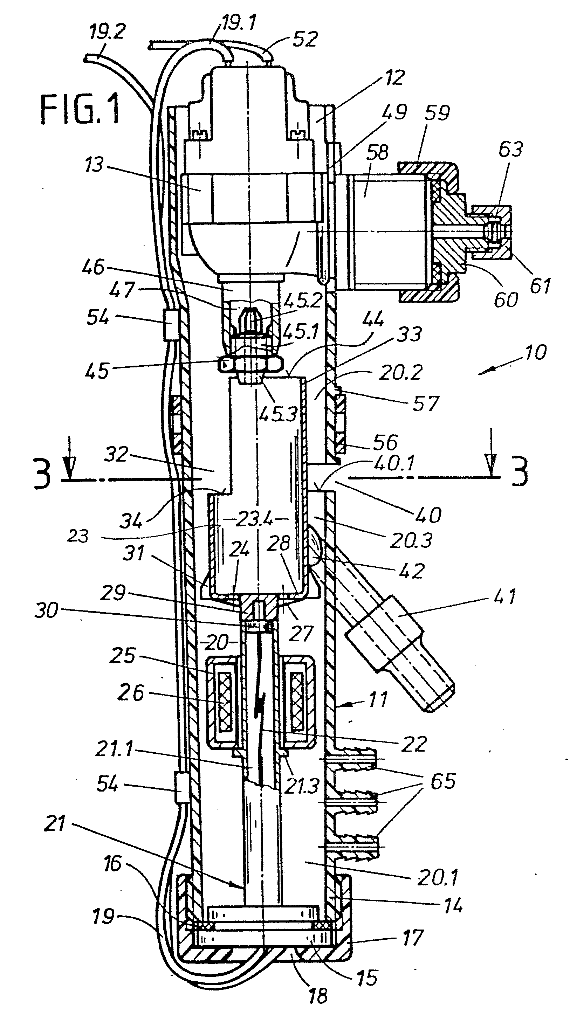

Von der Bodenplatte 15 ragt ein im Innern hohler Haltestab 21 auf. Dieser trägt fest aufgeklebt oder in sonstiger Weise befestigt den Zwischensammelbehälter 23. Der Haltestab 21 weist im Innern einen Aufnahmeraum 21.1 auf, in dem ein magnetisch zu betätigendes Kontaktpaar 22, ein sogenannter Reed-Kontakt untergebracht ist. Die Kontakte sind mit den Schalterleitungen 19 verbunden. Der Haltestab 21 hat etwa auf seiner Mitte in einem beträchtlichen Abstand von der Bodenplatte 15 einen Hubbegrenzungsanschlag 21.3. Oberhalb von diesem Hubbegrenzungsanschlag 21.3 befindet sich ein ringförmiger Schwimmer 25, in dem ein Ringmagnet oder eine sonstige Anordnung von Magneten 26 für die Betätigung des Reed-Kontaktes 22 in bekannter Weise und mit entsprechender Auslegung angebracht ist. Der Schwimmer besteht aus leichtem Werkstoff, wie einem hohlen Kunststoff oder einem Schaumkunststoff, so daß er von der Wasseroberfläche angehoben werden kann. Die obere Hubbegrenzung für den Schwimmer wird von Hubbegrenzungsrippen 27 unter dem Boden 28 des Zwischensammelbehälters 23 gebildet. Am Boden 28 ist ferner ein Befestigungshalter 29 für den Endzapfen 30 des Haltestabes 21 vorgesehen, wo beispielsweise eine Kleb- oder Schweißverbindung angewendet wird. Der Zwischensammelbehälter 23 ist etwa kreiszylinderförmig gestaltet und hat — wie aus Fig. 1 ersichtlich — einen Außendurchmesser der etwas geringer als der Innendurchmesser des Raumes 20 des Gehäuses 11 ist, so daß Wasser an den Seiten vorbeifließen kann. Leitflossen 31 dienen der Wasserführung. Der Zwischensammelbehälter 23 hat eine langgestreckte Form und eine Länge, die etwa zwei Drittel des unter ihm befindlichen Vorratsraumes ausmacht, jedoch ein wesentlich geringeres Aufnahmevolumen von nur wenigen Kubikzentimetern. Er ist nämlich bis etwas unterhalb seiner Höhenmitte einseitig mit einer Ausnehmung 32 versehen, so daß seine Außenwand 33 eine Überlaufkante 34 bildet, die zusammen mit der Ausnehmung 32 die Überlauföffnung darstellt. Die Ausnehmung 32 nimmt etwa ein Viertel eines vollen Umfanges ein, so daß die Außenwand 33 im übrigen Dreiviertel dem eintretenden Wasserstrahl Schutz und Führung bieten kann. Der Zwischensammelbehälter 23 befindet sich im Überlaufbereich 20.3 des Innenraumes. Etwas oberhalb der Überlaufkante 34 liegt nämlich die Überlaufausnehmung 40 des Vorratsraumes 20.1, die als in die Seitenwand 11.1 eingearbeiteter oder beim Spritzvorgang freigebliebener Schlitz gestaltet ist und sich ebenfalls über etwa ein Viertel des Umfanges erstreckt, jedoch auf der der Überlaufkante 34 des Zwischensammelbehälters 23 gegenüberliegenden Seite, so daß der eintretende Wasserstrahl nicht sofort zur Überlaufausnehmung 40 gelangen kann. Im Boden 28 des Zwischensammelbehälters 23 sind durchgehende Ablaßöffnungen 24 ausgebildet.

Etwas unterhalb der Überlaufausnehmung 40 ist in der Gehäusewand — wie aus den Figuren ersichtlich — einstückig ein Überlaufanschlußrohrstutzen 41 schräg nach unten weggeführt, der eine zum Vorratsraum offene Durchtrittsöffnung 42 aufweist. Er dient dazu, beim Versagen der Füllstandssteuerung zu hoch steigendes Wasser ordnungsgemäß zu einem Abfluß zu führen, wozu ein Abflußschlauch auf den Stutzen gesteckt wird. Sollte dieser Schlauch verstopft sein, so ist gemäß den Vorschriften eine weitere Überlaufausnehmung, nämlich die Überlaufausnehmung 40 vorgesehen, die noch weiter ansteigendes Wasser in den freien Umgebungsraum austreten läßt.

Etwa im Bereich der Oberkante 44 der Außenwand 33 des Zwischensammelbehälters 23 liegt die Einlaßdüse 45 für den Wasserstrahl. Sie ist in Form eines Einschraubteiles mit einem Außensechskant gestaltet und ist in den Ausgangsstutzen 46 des Absperrventils 13 eingeschraubt. Der Auslaßstutzen 46 hat im Innern einen Beruhigungsraum 47 in Form einer größeren Öffnung, die normalerweise als einfacher Auslaßstutzen verwendet wird, weil auf seine gerillte Außenwand ein Schlauch gesteckt wird. Hier ist jedoch die Einlaßdüse 45 mit einem Einschraubgewinde 45.1 und einem Beruhigungselement 45.2 versehen, welches schlitzkorbförmig oder auch loch-korbförmig gestaltet sein kann, so daß das Wasser in verschiedene Teilströme aufgeteilt wird und dadurch beruhigt aus der Einlaßdüse 45 austritt. Diese hat einen konischen Düsenmund 45.3.

Das Absperrventil hat eine handelsübliche Steckbefestigung 49 mit einer Nut, die über eine entsprechend gestaltete elastisch klemmende Wandausnehmung 50 und ihren Rand rastend gesteckt wird. Die eine Schaltleitung 19.1 führt zu dem einen Anschluß des Magnetventils. Die Zuführleitung 52 ist am zweiten Anschluß des Magnetventils angeschlossen. Die weitere Zuführleitung ist die Leitung 19.2, die zum Reed-Kontakt 22 führt. Die Schalterleitungen 19 sind hinter Haltehaken 54, welche einstückig an der Gehäusewand 11.1 ausgebildet sind, gesteckt. Auf einen zylindrischen Teil 11.2 der Gehäusewand ist außen eine Halteschelle 56 geklemmt. Für diese sind Höhenbegrenzungen 57 an der Gehäusewand ausgebildet.

Der Wasseranschluß ans Versorgungsnetz erfolgt über den Einlaßstutzen 58 des Absperrventils 13. Dieser ist handelsüblich mit einem Gewinde und einer Überwurfmutter 59 ausgestattet. Unter Beilage von Dichtung und Filter ist ein Reduzierstück 60 vorgesehen, welches seinerseits eine Überwurfmutter 61 und einen Rohrklemmring 63 für ein dünnes Wasserzuführrohr aufweist.

Im unteren Bereich der Wand 11.1 des Vorratsraumes 20.1 sind übereinanderliegend drei Schlauchanschlußstutzen 65 mit Entnahmeöffnungen vorgesehen. Diese sind mit einer durchgehenden Öffnung oder ggf. mit einer im Durchmesser verringerten Wandöffnung ausgestattet, so daß die Saugmengen durch Drosselwirkung bestimmt werden können. Das Gehäuse 11 ist einstückig aus einem geeigneten Kunststoff im Spritzgußverfahren hergestellt. Gleiches gilt für die Überwurfmutter, die Bodenplatte, den Haltestab, den Zwischensammelbehälter und ggf. den Schwimmer. Es können jedoch unterschiedliche Kunststoffe verwendet sein. Das Gehäuse 11 kann aus einem leicht durchscheinenden oder durchsichtigen Kunststoff gefertigt sein, um evtl. unerwünschte Verunreinigung schnell erkennen zu können. Weitere Befestigungseinrichtungen und dgl. können vorgesehen sein. Auch kann man Verbindungsmöglichkeiten für das Aneinanderreihen mehrerer solcher Vorrichtungen vorsehen.

Die Arbeitsweise der beschriebenen Vorrichtung ist folgende :

Es soll sichergestellt werden, daß durch die Schlauchanschlußstutzen 65 an eine zahnärztliche Behandlungsvorrichtung oder dgl. abgegebenes Wasser nicht beim Ausfallen des Drucks in der Netzversorgungsleitung wieder durch den Einlaßstutzen 58 rückwärts ins Netz gelangt und dadurch Verunreinigungen und Bakterien in das öffentliche Wassernetz gelangen. Wenn eine Wasserzufuhr gewünscht wird, werden die Leitungen 19.2 und 52 unter Spannung gesetzt. Wenn der Schwimmer 25 unten liegt, ist der Reed-Kontakt 22 geschlossen und das magnetisch betätigte Absperrventil 13 öffnet, Wasser gelangt durch den Einlaßstutzen 58 zum Ausgangsstutzen 46. In seinem Beruhigungsraum 47 fließt es in das Beruhigungselement 45.2 und als beruhigter Strahl aus der Einlaßdüse 45 heraus in einem relativ kleinen und ruhigen Strahl zwischen der Außenwand 33 in den Zwischensammelbehälter 23. Evtl. spritzendes Wasser kann nicht in die Überlaufausnehmung 40 gelangen. Es fließt vom Innenraum 23.4 durch die Ablaßöffnungen 24 im Boden 28 und ggf. über die Überlaufkante 34 in dem Ringraum zwischen der Wand 33 des Zwischensammelbehälters 23 und der Wand 11.1 des Gehäuses 11 in den Vorratsraum 20.1 Der Wasserstrahl trifft allenfalls auf den Boden 28 des Zwischensammelbehälters 23 oder auf dessen Wasserfläche. Er trifft jedoch nicht auf die Wasserfläche im Vorratsraum 20.1, so daß diese beruhigt ansteigt und folglich flatterfrei den Schwimmer 25 anhebt. Solange der Schwimmer 25 nicht angehoben ist, sind infolge der Magnetkräfte des Magneten 26 die Reed-Kontakte 22 geschlossen und der Magnet des Absperrventils 13 wird gespeist. Steigt nun der Flüssigkeitsspiegel an, so wird der Schwimmer 25 und mit ihm der Magnet 26 angehoben bis zu einer Höhe, in der der Vorratsraum 20.1 ausreichend gefüllt ist. Dan lösen sich die Reed-Kontakte und das Magnetventil wird von der Speisespannung gelöst und schaltet folglich die Wasserzufuhr ab. Ggf. kann der Schwimmer bis an die Hubbegrenzungsrippen 27 anstoßen und ist so in seiner Bewegung gehemmt. Sollte auf irgendeine Weise die Wasserzufuhr nicht unterbrochen werden, so steigt der Wasserspiegel weiter an und das zulaufende Wasser fließt über den ausreichend dimensionierten Überlaufanschlußrohrstutzen 41 zu dem aufgesteckten Schlauch und Ablauf. Sollte auch dieser verstopft sein, so gelangt das Wasser aus der Überlaufausnehmung 40 in den Umgebungsraum der Vorrichtung. So ist gesichert, daß auf keinen Fall Wasser aus dem Vorratsraum zurück in die Magnetventilanordnung treten kann. Die Düse 45 liegt nämlich in beträchtlichem Abstand von etwa mindestens 2 cm oberhalb der Unterkante 40.1 der obersten Überlaufausnehmung 40, so daß ein ausreichender Sicherheitsabstand gewährleistet ist. Es kann auch im Versagensfalle kein Wasser durch diese rückwärts gesaugt werden.

Aus dem Vorratsraum 20.1 wird über die Schlauchanschlußstutzen 65 das Wasser durch Saugkraft entnommen, hier in relativ kleinen Mengen durch etwa 2 mm große Schläuche in die einzelnen Teile einer zu spülenden und zu reinigenden Sauganordnung einer zahnärztlichen Behandlungseinrichtung.

Die Vorrichtung kann in mancherlei Weise abgewandelt werden. Sie kann vor allem räumlich konstruktiv den jeweiligen Baubedingungen angepaßt werden. Wichtig ist jedoch, daß der Wasserstrahl nicht direkt in den Vorratsraum geleitet wird und dadurch der Schwimmer oder eine sonstige Abtasteinrichtung ständig der Bewegung einer unruhigen Wasseroberfläche folgen müssen und entsprechend schnell wechselnde Schallimpulse abgeben, die nur mit einer aufwendigen Regelelektronik zu erfassen und zu einer ruhigen und sinnvollen Schaltung geführt werden können. Durch die einfache Maßnahme des Zwischensammelbehälters und des Eintretenlassens des beruhigten Wasserstrahls in diesen sind Flatterprobleme der Schalt- und Tasteinrichtung einfach vermieden. Das Gehäuse kann im Durchmesser größer oder auch quadratisch oder rechteckig gestaltet werden, um das erwünschte Volumen in dem zur Verfügung stehenden Raum unterzubringen. Es kann auch den evtl. direkt anzubauenden Geräten angepaßt sein.

Auch kann man die Höhenlage der Auslaßöffnungen der Schlauchanschlußstutzen 65 und die Länge der daran anschließenden Leitungen auf die jeweiligen Wassermengen und Saugbedingungen abstimmen.

Bezugszeichenliste

10   Vorrichtung
11   Gehäuse
11.1 Seitenwand
11.2 zylindrischer Teil
12   Einsteckraum
13   Absperrventil
14   unteres Ende
15  .Bodenplatte
16   Dichtung
17   Überwurfmutter
18   Mittelausnehmung
19   Schalterleitung
19.1 Schaltleitung
19.2 Leitung
20   Innenraum
20.1 Vorratsraum
20.2 Eintritts- und Überlaufraum
20.3 Überlaufbereich
21   Haltestab
21.1 Aufnahmeraum
21.3 Hubbegrenzungsanschlag
22   Kontaktpaar/Reed-Kontakt
23   Zwischensammelbehälter
23.4 Innenraum
24   Ablaßöffnung
25   Schwimmer
26   Magnet
27   Hubbegrenzungsrippe
28   Boden
29   Befestigungshalter
30   Endzapfen
31   Leitflossen
32   Ausnehmung
33   Außenwand
34   Überlaufkante
40   Überlaufausnehmung
40.1 Unterkante
41   Überlaufanschlußrohrstutzen
42   Durchtrittsöffnung
44   Oberkante
45   Einlaßdüse
45.1 Einschraubgewinde
45.2 Beruhigungselement
45.3 Düsenmund
46   Ausgangsstutzen
47   Beruhigungsraum
49   Steckbefestigung
50   Wandausnehmung
52   Zuführleitung
54   Haltehaken
56   Halteschelle
57   Höhenbegrenzung
58   Einlaßstutzen
59   Überwurfmutter
60   Reduzierstück
61   Überwurfmutter
63   Rohrklemmring

65   Schlauchanschlußstutzen

**Patentansprüche**

1. Vorrichtung (10) zum Einlassen von Reinigungs- und/oder Spülwasser in eine zahnärztliche Behandlungseinrichtung, wobei Mittel zum Verhindern des Rückflusses ins Versorgungsnetz derart vorgesehen sind, daß das Wasser mit Hilfe eines steuerbaren Absperrventils (13) in einen Vorratsraum (20.1) eingelassen wird, der wenigstens einen Überlaufausgang (40, 41) und in seinem unteren Bereich wenigstens eine Entnahmeöffnung (65) aufweist und wobei ein Füllstandtaster (22, 25, 26) mit dem Absperrventil (13) zusammenwirkt, dadurch gekennzeichnet, daß zwecks Beruhigung des Flüssigkeitsspiegels im Bereich des Füllstandtasters (22, 25, 26) dem Vorratsraum (20.1) ein Zwischensammelbehälter (23) zugeordnet ist, in den das Wasser aus einer dem Absperrventil (13) nachgeordneten Einlaßdüse (45) fließt und daß wenigstens eine Überströmöffnung (24, 34) am Zwischensammelbehälter (23) vorgesehen ist, aus der das Wasser in den Vorratsraum (20.1) abfließt.

2. Vorrichtung nach Anspruch 1, dadurch gekennzeichnet, daß der Zwischensammelbehälter (23) als Überströmöffnungen im Bereich seines Bodens (28) Ablaßöffnungen (24) und im Abstand über dem Boden (28) wenigstens eine Überlauföffnung (Überlaufkante 34) aufweist.

3. Vorrichtung nach Anspruch 1, dadurch gekennzeichnet, daß das Absperrventil (13) einen Ausgangsstutzen (46) aufweist, an dem die Einlaßdüse (45) für den Zwischensammelbehälter (23) ausgebildet ist, die im Bereich des oberen Randes (44) des Zwischensammelbehälters (23) liegt.

4. Vorrichtung nach wenigstens einem der vorstehenden Ansprüche, dadurch gekennzeichnet, daß der Vorratsraum (20.1) in einem langgestreckten, vertikal angeordneten, vorzugsweise kreisröhrenförmigen Gehäuse (11) vorgesehen ist, welches im Abstand unter der Einlaßdüse (45) in der Seitenwand (11.1) als Überlaufausgänge einen Überlaufanschluß (41) und eine Überlaufausnehmung (40) aufweist und daß die Überlauföffnung (32, 34) des vorzugsweise kreiszylinderförmigen Zwischensammelbehälters (23) auf der der Überlaufausnehmung (40) des Gehäuses (11) gegenüberliegenden Seite angeordnet ist, und der Zwischensammelbehälter (23) im Bereich der Überlaufausnehmung (40) der Seitenwand (11.1) des Gehäuses (11) des Vorratsraumes (20.1) eine den eintretenden Wasserstrahl abdeckende Wand (33) aufweist, die im Abstand von der Seitenwand (11.1) des Gehäuses (11) verläuft.

5. Vorrichtung nach wenigstens einem der vorstehenden Ansprüche, dadurch gekennzeichnet, daß der Überlaufanschluß (41) mit einem schräg nach unten weisenden Rohrstutzen (41) gebildet ist, auf welchen ein Überlaufschlauch steckbar ist.

6. Vorrichtung nach wenigstens einem der vorstehenden Ansprüche, dadurch gekennzeichnet, daß der Ausgangsstutzen (46) des Absperrventils (13) einen Beruhigungsraum (47) aufweist, in dem ein loch- oder schlitz-korb-förmiges Beruhigungselement (45.2) angeordnet ist, durch welches das vom Absperrventil (13) abgegebene Wasser zur Einlaßdüse (45) fließt.

7. Vorrichtung nach wenigstens einem der vorstehenden Ansprüche, dadurch gekennzeichnet, daß der Zwischensammelbehälter (23) auf einem durch den Vorratsraum (20.1) vom Boden (15) aufragenden Haltestab (21) angeordnet ist.

8. Vorrichtung nach Anspruch 7, dadurch gekennzeichnet, daß im Haltestab (21) ein mit magnetischen Kräften schaltbarer Reed-Kontakt (22) angeordnet ist und den Haltestab (21) ein ringförmiger Schwimmer (25) umgibt, in dem sich ein Dauermagnet (26) befindet.

9. Vorrichtung nach Anspruch 8, dadurch gekennzeichnet, daß Haltestab (21) und Schwimmer (25) Hubbegrenzungsanschläge (21.3, 27) zugeordnet sind.

10. Vorrichtung nach wenigstens einem der vorstehenden Ansprüche, dadurch gekennzeichnet, daß der Haltestab (21) mit dem Reed-Kontakt (22) von einer Bodenplatte (15) getragen ist, welche mit Hilfe einer Überwurfmutter (17) untem am Gehäuse (11 ; 14) unter Beilage einer Dichtung (16) angeschraubt ist.

11. Vorrichtung nach wenigstens einem der vorstehenden Ansprüche, dadurch gekennzeichnet, daß als Entnahmeöffnungen des Vorratsraums (20.1) in der Seitenwand (11.1) im unteren Bereich mehrere, vorzugsweise in verschiedenen Höhenlagen liegende Schlauchanschlußstutzen (65) ausgebildet sind.

12. Vorrichtung nach wenigstens einem der vorstehenden Ansprüche, dadurch gekennzeichnet, daß das Gehäuse (11) im oberen Bereich einen nach oben offenen Einsteckraum (12) für ein handelsübliches Magnetabsperrventil (13) mit Steckbefestigung aufweist.

13. Vorrichtung nach wenigstens einem der vorstehenden Ansprüche, dadurch gekennzeichnet, daß das Gehäuse (11) an seinem Umfang mit einer Höhenbegrenzungen (57) aufweisenden klemmbaren Halteschelle (56) und Haltehaken (54) für die Schalterleitungen versehen ist.

14. Vorrichtung nach wenigstens einem der vorstehenden Ansprüche, dadurch gekennzeichnet, daß das Gehäuse (11) ein einstückiger, langgestreckter rohrförmiger Körper mit angeformten Entnahme-Schlauchanschlußstutzen (65) und Überlaufanschluß (41) aus spritzgegossenem Kunststoff ist.

15. Vorrichtung nach wenigstens einem der vorstehenden Ansprüche, dadurch gekennzeichnet, daß das Absperrventil (13) ein elektromagnetisch betätigtes Ventil ist.

**Claims**

1. An apparatus (10) for the admission of cleansing and/or rinsing water to a dental treatment device, means being provided for preventing a return flow to the supply system in such a way that the water is admitted with the aid of a controllable shut-off valve (13) to a reservoir (20.1) which comprises at least one overflow outlet (40, 41) and, in its lower region, at least one tapping opening (65), and a filling sensor (22, 25, 26) cooperates with the shut-off valve (13), characterized in that, in order to steady the level of the liquid in the region of the filling sensor (22, 25, 26), the reservoir (20.1) has associated with it an intermediate collecting container (23) into which the water flows out of an inlet nozzle (45) downstream of the shut-off valve (13), and at least one overflow opening (24, 34) is provided in the intermediate collecting container (23) out of which the water flows into the reservoir (20.1).

2. An apparatus according to Claim 1, characterized in that the intermediate collecting container (23) comprises discharge openings (24) as overflow openings in the region of its base (28) and at least one overflow opening (overflow edge 34) at a distance above the base (28).

3. An apparatus according to Claim 1, characterized in that the shut-off valve (13) comprises an output socket (46) on which is formed the inlet nozzle (45) for the intermediate collecting container (23), which nozzle is disposed in the region of the upper edge (44) of the intermediate collecting container (23).

4. An apparatus according to at least one of the preceding Claims, characterized in that the reservoir (20.1) is provided in an elongate, vertically disposed, and preferably cylindrical casing (11) which comprises an overflow connexion (41) and an overflow aperture (40) as overflow outlets at a distance below the inlet nozzle (45) in the side wall (11.1), and the overflow opening (32, 34) of the preferably cylindrical intermediate collecting container (23) is disposed on the side opposite the overflow aperture (40) of the casing (11), and, in the region of the overflow aperture (40) in the side wall (11.1) of the casing of the reservoir (20.1), the intermediate collecting container (23) comprises a wall (33) which covers the jet of water entering and which is spaced from the side wall (11.1) of the casing (11).

5. An apparatus according to at least one of the preceding Claims, characterized in that the overflow connexion (41) is formed by a pipe socket (41) which is orientated obliquely downwards and on which an overflow hose can be fitted.

6. An apparatus according to at least one of the preceding Claims, characterized in that the output socket (46) of the shut-off valve (13) comprises a steadying chamber (47) in which is disposed a perforated or slotted basket-shaped steadying element (45.2) through which the water discharged by the shut-off valve (13) flows to the inlet nozzle (45).

7. An apparatus according to at least one of the preceding Claims, characterized in that the intermediate collecting container (23) is disposed on a holding rod (21) projecting from the base (15) through the reservoir (20.1).

8. An apparatus according to Claim 7, characterized in that a magnetically operable reed contact (22) is disposed in the holding rod (21), and an annular float (25), in which a permanent magnet (26) is disposed, surrounds the holding rod (21).

9. An apparatus according to Claim 8, characterized in that stroke-limiting stops (21.3, 27) are associated with the holding rod (21) and the float (25).

10. An apparatus according to at least one of the preceding Claims, characterized in that the holding rod (21) with the reed contact (22) is supported by a base plate (15) which is screwed to the bottom of the casing (11 ; 14) with the aid of a cap nut (17) with the interposition of a seal (16).

11. An apparatus according to at least one of the preceding Claims, characterized in that a plurality of hose connexion sockets (65), preferably arranged at different heights, are formed as tapping openings of the reservoir (20.1) in the lower area of the side wall (11.1).

12. An apparatus according to at least one of the preceding Claims, characterized in that the casing (11) comprises in its upper area a space (12) open at the top for the insertion of a conventional magnetic shut-off valve (13) having a plug-in fixing.

13. An apparatus according to at least one of the preceding Claims, characterized in that the casing (11) is provided on its periphery with a clampable holding collar (56) comprising elevation stops (57), and holding hooks (54) for the connexion lines.

14. An apparatus according to at least one of the preceding Claims, characterized in that the casing (11) is an integral, elongate, tubular body with integrally formed hose-connexion tapping sockets (65) and an overflow connexion (41) of injection-moulded plastics material.

15. An apparatus according to at least one of the preceding Claims, characterized in that the shut-off valve (13) is an electromagnetically actuated valve.

**Revendications**

1. Dispositif (10) pour l'arrivée d'eau de nettoyage et/ou de rinçage dans un dispositif de traitement dentaire, dans lequel des moyens pour interdire le reflux de l'eau dans le réseau d'alimentation sont prévus par le moyen que l'eau peut entrer, à l'aide d'une vanne d'arrêt commandée (13), dans un volume de stockage (20.1) qui présente au moins une sortie de débordement (40, 41) et, dans sa zone inférieure, au moins une ouverture de prélèvement (65) et dans lequel une sonde de niveau de remplissage (22, 25, 26) collabore avec la vanne d'arrêt (13), caractérisé en ce que, dans un but de stabilisation du niveau de l'eau dans la zone de la sonde du niveau de remplissage (22, 25, 26), au volume de stockage (20.1) correspond un réservoir intermédiaire (23) dans lequel l'eau s'écoule en provenant d'une buse d'arrivée (45) disposée en aval de la vanne d'arrêt (16) et en ce que, sur le réservoir intermédiaire (23), est prévue au moins une ouverture de débordement (24, 34) depuis laquelle l'eau s'écoule dans le volume de stockage (20.1).

2. Dispositif selon la revendication 1, caractérisé, en ce que le réservoir intermédiaire (23) présente, au voisinage de son fond (28), des ouvertures d'évacuation (24) servant d'ouvertures en cas de courant trop fort et, à une certaine distance au-dessus du fond (28), au moins une ouverture de débordement (arête de débordement 34).

3. Dispositif selon la revendication 1, caractérisé en ce que la vanne d'arrêt (13) présente une tubulure de sortie (46) sur laquelle est prévue, pour le réservoir intermédiaire (23), la buse d'arrivée (45) qui se trouve au voisinage du bord supérieur (44) du réservoir intermédiaire (23).

4. Dispositif selon au moins l'une des revendications précédentes, caractérisé en ce que le volume de stockage (20.1) est prévu dans un carter (11) de forme allongée, disposé verticalement, de préférence en forme de tube circulaire et présentant, à une certaine distance sous la buse d'arrivée (45), dans la paroi latérale (1.1), comme sorties de débordement un raccord de débordement (41) et un évidement de débordement (40) ; et en ce que l'ouverture de débordement (32, 34) du réservoir intermédiaire (23), qui est de préférence en forme de cylindre circulaire, est disposée du côté opposé à l'évidement de débordement (40) du carter (11) ; et en ce que le réservoir intermédiaire (23) présente, dans la zone de l'évidement de débordement (40) de la paroi latérale (11.1) du carter (11) du volume de stockage (20.1) une paroi (33) qui protège du jet d'eau qui arrive et qui court à une certaine distance de la paroi latérale (11.1) du carter (11).

5. Dispositif selon au moins l'une des revendications précédentes, caractérisé en ce que le raccord de débordement (41) est prévu avec une tubulure (41) dirigée obliquement vers le bas et sur laquelle on peut enfiler un tuyau de débordement.

6. Dispositif selon au moins l'une des revendications précédentes, caractérisé en ce que la tubulure de sortie (46) de la vanne d'arrêt (16) présente un volume de stabilisation (47) dans lequel est disposé un élément de stabilisation (45.2), en forme de panier perforé ou fendu, à travers lequel s'écoule, en direction de la buse d'arrivée (45), l'eau fournie par la vanne d'arrêt (13).

7. Dispositif selon au moins l'une des revendications précédentes, caractérisé en ce que le réservoir intermédiaire (23) est disposé sur une tige support (21) qui fait saillie depuis le fond (15) à travers le volume de stockage (20.1).

8. Dispositif selon la revendication 7, caractérisé en ce que dans la tige support (21) est disposé un contact Reed (22) que des forces magnétiques peuvent commuter ; et en ce qu'un flotteur annulaire (25), dans lequel se trouve un aimant permanent (26), entoure la tige support (21).

9. Dispositif selon la revendication 8, caractérisé en ce qu'à la tige support (21) et au flotteur (25) correspondent des butées de limitation de course (21.3, 27).

10. Dispositif selon au moins l'une des revendications précédentes, caractérisé en ce que la tige support (21) contenant le contact Reed (22) est portée par une plaque de fond (15) qui est vissée, à l'aide d'un écrou-chapeau (17), en bas, sur le carter (11 ; 14) avec interposition d'une garniture d'étanchéité (16).

11. Dispositif selon au moins l'une des revendications précédentes, caractérisé en ce que, comme ouvertures de prélèvement du volume de stockage (20.1) sont prévues dans la paroi latérale (1.1), dans la zone inférieure, plusieurs tubulures de raccordement de tube souple (65) situées de préférence à des niveaux différents.

12. Dispositif selon au moins l'une des revendications précédentes, caractérisé en ce que le carter (11) présente dans sa zone supérieure un volume d'enfichage (12), ouvert vers le haut, pour une électro-vanne d'arrêt (13) du commerce avec fixation par enfichage.

13. Dispositif selon au moins l'une des revendications précédentes, caractérisé en ce que le carter (11) comporte à sa périphérie un collier de fixation (56) qui peut se brider et présente des limitations de hauteur (57) ainsi qu'un crochet de fixation (54) pour les conducteurs de commutation.

14. Dispositif selon au moins l'une des revendications précédentes, caractérisé en ce que le carter (11) est un corps d'une pièce, de forme allongée, comportant des tubulures de raccordement à un tube souple de prélèvement (65) venues de formes et en ce que le raccord de débordement (41) est en plastique injecté.

15. Dispositif selon au moins l'une des revendications précédentes, caractérisé en ce que la vanne d'arrêt (13) est une vanne à commande électromagnétique.

FIG.1

0 104 418

0 104 418

FIG. 2

FIG. 3